(19) Europäisches Patentamt

European Patent Office

Office européen des brevets

(11) **EP 1 480 170 A1**

(12) **EUROPEAN PATENT APPLICATION**

(43) Date of publication:
**24.11.2004 Bulletin 2004/48**

(51) Int Cl.$^7$: **G06T 7/20**

(21) Application number: **03253131.1**

(22) Date of filing: **20.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicants:
• **Mitsubishi Electric Information Technology
Centre Europe B.V.
Guildford GU2 7YD (GB)**
• **MITSUBISHI DENKI KABUSHIKI KAISHA
Tokyo 100 (JP)**

(72) Inventors:
• **Bober, M. Z., Dr., c/o Mitsubishi Electric Inform.
The Surrey Res. Park, Guildford GU2 7YD (GB)**
• **Berriss, W.P.,Dr., c/o Mitsubishi Electric Inform.
The Surrey Res. Park, Guildford GU2 7YD (GB)**

(74) Representative:
**Whitlock, Holly Elizabeth Ann et al
R G C Jenkins,
26 Caxton Street
London SW1H 0RJ (GB)**

(54) **Method and apparatus for processing images**

(57) A method of comparing images comprises comparing DCT coefficients for a pair of image regions to determine similarity between the image regions, wherein the comparison involves at least one AC coefficient and wherein the influence of at least one AC coefficient in the determination of similarity is weighted.

FIG. 1

**Description**

The invention relates to a method for processing images, and more specifically to a method for determining the similarity between images or regions within images. The method is especially useful, for example, for detecting motion or for detecting a scene change in a sequence of images making up a video. The invention also relates to a corresponding apparatus.

An example of an application where motion detection is important is a video surveillance system. For example, a camera of a video surveillance system may be directed at a normally static scene, where detection of any motion may be of interest. Images captured by the camera are usually encoded at an early stage, as it is more efficient to transfer compressed image data to other parts of the system.

Common coding techniques, such as JPEG and MPEG, involve the use of the Discrete Cosine Transform (DCT in the following), which affords a high data compression ratio, and therefore reduces storage and transmission requirements.

A known method of detecting changes between images is to perform difference calculations on a pixel by pixel basis between pairs of images. However, if an image has been encoded, for example, using a technique involving DCT as described above, it is necessary first to decode it before carrying out the pixel comparisons. Both the decoding, especially the inverse DCT, and the motion detection algorithm involving the pixel comparisons are computationally intensive so there is a high demand on the available processing power.

For indexing sequences of images such as videos for searching and retrieval, it can useful to divide the image sequence into "shots", which correspond, for example, to one scene or one camera operation such as a pan. Various techniques are known for performing such a division, and usually involve detecting the similarity between pairs of images and taking a low measure of similarity as an indication of scene or shot change.

The paper "Video scene change detection using the generalized sequence trace" by C. Taskiran and E.J. Delp, Proceedings of IEEE Int'1 Conference on Acoustic, Speech and Signal Processing, May 1998 pp. 2961-2964 discloses a method using the DC coefficients of the DCT for a frame in an MPEG sequence to compare successive pairs of frames and hence to detect scene changes. More specifically, a dc-image, which is the image formed by the DC coefficients of the DCT for a frame, is obtained for each of a pair of frames, and the luminance histogram of each dc-image is also obtained. A feature vector is derived using calculations based on the luminance histograms and the feature vector is compared with the corresponding feature vector for the next pair of frames.

The paper " Video parsing, retrieval and browsing: An integrated and content-based solution" by Zhang, Low, Smoliar and Wu, Proceedings ACM Multimedia '95 also mentions temporal segmentation of sequences of images involving detecting boundaries between consecutive camera shots, and refers to the use of DCT coefficients and motion vectors for content comparison and segmentation.

The paper "Video parsing and browsing using compressed data" by Zhang, Low and Smoliar, from Multimedia Tools and Applications, Vol. 1- 1995, pages 89-111 discusses the use of DCT coefficients to detect differences between frames, and hence shot boundaries. A first algorithm constructs a vector representation for each frame using a subset of the DCT coefficients of a subset of the blocks in the frame. A pair of frames are then compared using a difference metric involving the inner product of two such vector representations. A second algorithm takes the sum of the difference between DCT coefficients of corresponding blocks of consecutive video frames over all 64 coefficients, and compares the result with a threshold. If the result exceeds the threshold, it is said that the block has changed across the two frames. Instead of using all DCT coefficients for a block, only a subset of coefficients and blocks may be used.

The use of DCT coefficients to determine the similarity between images, as in some of the papers discussed above, avoids the need to decode the DCT-encoded images as when performing a pixel comparison in the spatial domain.

The present invention provides an improvement on the known techniques.

Aspects of the invention are set out in the accompanying claims.

In general terms, a first aspect of the invention compares image regions by comparing DCT coefficients including at least one AC coefficient for the respective image regions to determine the similarity between the image regions. The influence of one AC coefficient in determining the similarity differs from the influence of other DCT coefficients, such as the DC coefficient or other AC coefficients. In other words, the influence of the, some or all of the AC coefficients is weighted in the similarity decision. The weighting can be carried out, for example, by a weight associated with a particular AC coefficient, or by a threshold. The similarity comparison may involve one AC coefficient or several AC coefficients, and may or may not also involve the DC coefficient. The DC coefficient may or may not also be weighted. The weighting reflects the reliability of the respective coefficients in detecting similarity. This can be determined, for example, by experiment.

According to one embodiment of the invention, the calculation of similarity between image regions is based on a weighted sum of the difference between corresponding pairs of DCT coefficients for a pair of image regions over a plurality of DCT coefficients, including at least one AC coefficient. The result of the weighted sum is compared with one or more thresholds.

According to another embodiment, the difference between corresponding pairs of DCT coefficients for a pair of image regions is calculated, for a plurality of DCT coefficients including at least one AC coefficient. Each difference is compared with a respective threshold associated with the respective DCT coefficient. Some coefficients are associated with a plurality of thresholds, and the selection of the threshold is dependent on the result of the threshold comparison for another coefficient.

The above embodiments may be combined.

In another aspect of the invention, DCT coefficients of image regions are compared individually or independently of each other, in the similarity or determination. For example, one DCT coefficient for one region is compared with the corresponding DCT coefficient for another region and evaluated, and another DCT coefficient for the first region is compared with the corresponding DCT coefficient for the second region and evaluated separately from the first evaluation. The results of both the first and second evaluations (and any other evaluations) may be considered together in the overall evaluation or similarity determination.

A method according to an embodiment of the invention may, for example, be used to detect motion in a sequence of images, or it may be used to temporally segment a sequence of images by detecting a change in the sequence such as a change of shot or a scene change, or to separate regions containing motion from those regions that contain no motion.

A method according to an embodiment of the invention is implemented by a suitable apparatus, such as a computer, by processing signals corresponding to image data.

In this specification, the term image region means a region of an image such as a group of pixels and may correspond to a entire image or a sub-region of an image. Image regions which are compared may be in the same image or in different images.

Embodiments of the invention will now be described with reference to the accompanying drawings of which:

Fig. 1 is a schematic diagram of an apparatus according to an embodiment of the invention;

Fig. 2 is a representation of a image;

Fig. 3 is a diagram showing an array of DCT coefficients;

Fig. 4 is another diagram showing an array of DCT coefficients;

Fig. 5 is a schematic diagram of another apparatus according to an embodiment of the invention.

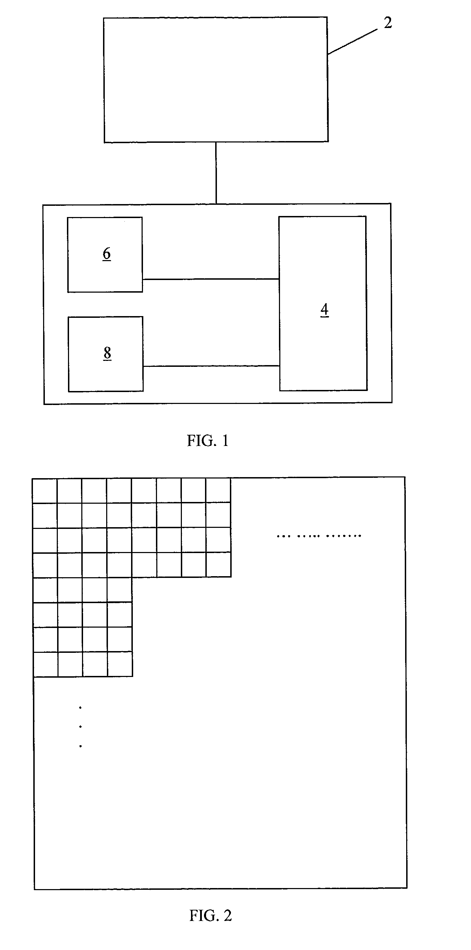

Fig. 1 is an schematic diagram of an apparatus according to an embodiment of the invention and for implementing methods according to embodiments of the invention.

The apparatus of Fig. 1 is in the form of a computer including a monitor 2, a processor 4, and two storage means 6 and 8. Other standard components, such as a keyboard and mouse, not shown, are also included.

One storage means 6 stores a computer program for implementing a method according to an embodiment of the invention. The other storage means 8 stores image data. It is not necessary to have two separate storage means, and, for example, a single storage means may be used instead. The storage means may be any known type of storage device such as a hard disk, floppy disk or DVD. The program is not necessarily implemented in software form, and may instead, for example, be in hardware form such as a dedicated chip.

The processor 4 operates on the image data stored in storage means 8 using the program stored in storage means 6 as described below.

In this embodiment, the image data is stored in the spatial domain. In other words, each image is stored in the form of data representing a plurality of pixels, each pixel having a value representing the color of the pixel, in a known format such as RGB, HSV, YUV. This is represented in Fig. 2, which shows an image 10 (such as a frame or field of a video sequence) divided into pixels 12. In an alternative embodiment, the image data may be stored in the DCT domain (see below).

The image data in the spatial domain, as shown in Fig. 2, is converted into the frequency domain using the DCT. The DCT is well-known in compression of image data in various techniques such as JPEG or MPEG and will not be described in detail. However, a brief outline is included.

To perform the DCT, the image data of an image is divided into blocks of pixels. In this embodiment, the image is divided into 8x8 blocks of pixels, as illustrated in Fig. 2. Other sizes of blocks (MxN) may be used.

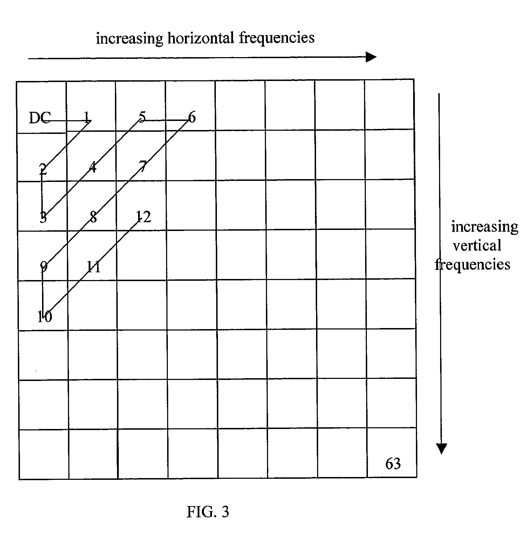

Each block is subjected to the DCT transform. This results in a plurality of DCT coefficients for the block, which represent the block in the frequency domain. More specifically, the DCT results in a DC coefficient, corresponding essentially the mean value of the pixels in the block, and 63 AC coefficients. It is standard to represent the DCT coefficients in the form of an array as shown in Fig. 3, in which left to right in the array corresponds to increasing horizontal frequencies and top to bottom corresponds to increasing vertical frequencies. The coefficients are numbered in a zigzag order, as shown in Fig. 3. In the following, the array of DCT coefficients for an image region as shown in Fig. 3 will be described as a DCT block. Corresponding DCT coefficients for a pair of DCT blocks for image regions means DCT coefficients which occupy the same position in the array.

Pairs of images encoded using the DCT are then compared, as described below.

The DCT blocks for a pair of image regions are then compared to determine the similarity between the original image regions. In this embodiment, a DCT block for an image region in one position in an image, for example, the top left hand corner, is compared with the DCT block for the same image region in another region. This comparison may be useful for various reasons, such as detecting motion, or for detecting a significant change in the image region which may indicate a scene change in a sequence of images such as a video.

However, the invention is not limited to comparing regions in different images, and it may be useful, for example, in some applications to compare different regions in the same image.

In this embodiment, the DCT blocks for corresponding image regions, in a pair of images consisting of a current image and a reference image, are compared using a weighted sum, as set out below as equation (1).

$$D_1 = \sum_{i=o}^{n} w_i \; \left| \; C_i^C - C_i^R \; \right| \qquad (1)$$

where $W_i$ is the weight for coefficient i

$C_i^c$ is the value of the $i^{th}$ coefficient for the region of the current image

$C_i^R$ is the value of the $i^{th}$ coefficient for the region of the reference image

and n is the number of number of coefficients used.

The index I indicates the $i^{th}$ DCT coefficient; i = 0 corresponds to the DC coefficient.

The result of the weighted sum is compared with a threshold, as set out below.

$$D_1 > T_1$$
$$D_1 \leq T_1 \qquad (2)$$

If D exceeds $T_1$ then this is a sign that the image regions are dissimilar, which in this case is taken as a sign of motion. If D is less than or equal to $T_1$ this suggests that the image regions are similar, or in other words there is no motion.

By varying n, only the AC coefficients up to a certain number, say 25, may be used in the weighted sum. Preferably, n = 2, 5 or 9. By setting $W_i$ to zero for certain values of i, other subsets of the DCT coefficients can be used. For example, setting $W_0$ to zero excludes the DC coefficient. However, at least one AC coefficient is included in each sum.

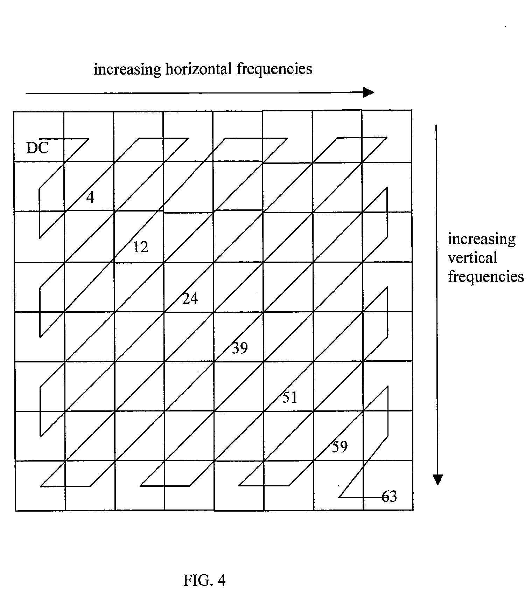

Preferably, when any AC coefficient on a diagonal from top right to bottom left is involved in the weighted sum, all the AC coefficients on that diagonal are included, for balance in terms of frequency components. For example, referring to Fig. 3, if any of the 6th to the 9th AC coefficients are to be included, then all of them are included. Alternatively, all the DCT coefficients on the diagonal from top left from bottom right may be included, that is, the DC coefficient and AC coefficients 4,12, 24, 39, 51, 59 and 63, excluding all other AC coefficients, as shown in Fig. 4.

The weights are preferably predetermined, based on experiments which indicate the degree of reliability of the respective coefficient in determining similarity. Typically, the DC and lower AC coefficients are most reliable, and preferably some or all of the lower AC coefficients are included in the sum.

The weights and thresholds may be varied according to the application, or the type of image data being analysed.

A second embodiment of a method according to the invention will now be described.

As in the first embodiment, the DCT coefficients for blocks in a pair of images, current and reference images, are obtained.

The DCT blocks for corresponding image regions in the current and reference images are compared.

First the DC coefficients for the pair of DCT blocks are compared. More specifically, the absolute difference of the values of the DC coefficients is obtained using equation (3) below:

$$D_{d.c} = \left| C_0{}^C - C_0{}^R \right| \tag{3}$$

using the notation explained above.

Similarly, the absolute difference of the values of the first AC coefficient for the pair of DCT blocks and the absolute difference of the values of the second AC coefficient for the pair of DCT blocks is also obtained.

$$D_{a.c.1} = \left| C_1^C - C_1^R \right|$$
$$D_{a.c.2} = \left| C_2^C - C_2^R \right| \tag{4}$$

This gives three values,

$$D_{d.c.}, D_{a.c.1}, D_{a.c.2}$$

First, $D_{d.c}$ is compared with a predetermined threshold T2, using equation (5) below:

$$D_{d.c.} > T_2$$
$$D_{d.c.} \leq T_2 \tag{5}$$

This is effectively equivalent to computing differences on sub-sampled images.

If $D_{d.c}$ is higher than the threshold, this suggests a high degree of difference between the DC coefficient of the image regions. If $D_{d.c}$ is lower than the thresholds, this suggests that the image regions are similar.

Each of $D_{d.c.1}$ and $D_{a.c.2}$ are also compared with thresholds. However, unlike the DC coefficient, $D_{a.c.1}$ and $D_{a.c.2}$ are each associated with two thresholds $T_{1.1}$, $T_{1.2}$ and $T_{2.1}$, $T_{2.2}$ respectively. The choice of threshold is dependent on the result of equation (5) above.

More specifically, if the comparison of the DC coefficient indicates that the image regions are similar ($D_{d.c} \leq T_2$), then a higher threshold is used for the comparison of the AC coefficients. In other words, a stricter and more demanding test is used for the AC coefficients in order to suggest dissimilarity, if the DC coefficient has already suggested similarity.

Similarly, if $D_{d.c} > T_2$, suggesting that the image regions are different, then lower thresholds are used for the AC coefficients, thus a more demanding test to prove similarity.

In more detail for the first AC coefficients, $D_{a.c.1}$ has two thresholds $T_{1.1}$ and $T_{1.2}$, where $T_{1.1} < T_{1.2}$. If $D_{d.c} \leq T_2$, then $D_{a.c.1}$ is compared with $T_{1.2}$, but if $D_{d.c} > T_2$, then $D_{a.c.1}$ is compared with $T_{1.1}$. Similarly, $D_{a.c.2}$ has two thresholds $T_{2.1}$ and $T_{2.2}$, and if $D_{d.c} \leq T_2$, then $D_{a.c.2}$ is compared with $T_{2.2}$, but if $D_{d.c} > T_2$, then $D_{a.c.2}$ is compared with $T_{2.1}$.

If $D_{a.c.1} > T_{1.2}$, bearing in mind that $T_{1.2}$ is a high threshold, then this suggests that despite the similarity between the DC coefficients, the image regions may actually be quite different.

The result of each comparison may be classified as either "different" or "similar".

In this example, suppose $D_{d.c} \leq T_2$, which gives a result of "similar".

Then, threshold $T_{1.2}$ is selected for AC coefficient 1 and threshold $T_{2.2}$ is selected for AC coefficient 2.

If $D_{a.c.1} > T_{1.2}$ then the result of the comparison is "different"

If $D_{a.c.1} \leq T_{1.2}$ then the result is "similar". $\tag{6}$

If $D_{a.c.2} > T_{1.2}$ then the result is "different"

If $D_{a.c.2} \leq T_{1.2}$ then the result is "similar" $\tag{7}$

The results of equations (5), (6) and (7) are then combined. In this example, a majority decision based on the decisions of each of the three coefficients is taken.

In this example, suppose the results of equations (5) and (7) are "similar" but equation (6) is "different", then the overall result is "similar".

In this example, only three coefficients are used, and they are the first three coefficients, but any coefficients and any number of coefficients, odd or even, may be used. Preferably, the selected coefficients are balanced in terms of the array, as described in relation to the first embodiment. In the example above, all the coefficients including the DC coefficient are used in the majority voting. Alternatively, the majority voting may be performed using the results of the AC coefficients, for example, where there are an odd number of AC coefficients. For example, in a simple case, the result of the DC coefficient comparison determines the threshold for the first AC coefficient comparison, and the result of first AC coefficient comparison is used as the indication of similarity (majority voting based on 1 AC coefficient). The result of the majority voting on the AC coefficients may optionally also be compared with the result of the DC coefficient test. As in the first embodiment, the reliability of the coefficients, and hence their usefulness in the test, may be determined empirically. Similarly, the thresholds may be determined empirically. In this example, only two thresholds are used, but there may be more or fewer thresholds for each coefficient. In a variation of the above example, some or all of the coefficients may have only one associated threshold. When all coefficients have only one threshold, this reduces to a simple majority voting decision. In the above example, the thresholds for the AC coefficients are all determined on the basis of the result for the DC coefficient. However, a more complex determination of the thresholds could be carried out using, for example, the results of comparisons of some or all of other other coefficients, such as all preceding AC coefficients (in terms of the DCT array).

The above methods of comparing image regions may be carried out for some or all of the image blocks in a pair of images to compare the images overall. A decision on similarity between images overall may be carried out on the basis of the similarities between regions, for example, again using a majority voting decision. If there are more regions that are different than are similar, then this indicates that the images are different or vice versa. Alternatively, if a predetermined number of regions are different, say, one or two, this may be taken to indicate a difference. This may be useful, for example, for detecting motion in a video surveillance system, where accuracy is important. In other applications, such as detecting a scene change in a sequence of images such as a video, for segmenting the video into shots for indexing purposes, usually more than one or two regions need to be different to indicate a scene change. In the above example, the result of each comparison is either "different" or "similar". Alternatively, the result could for example be given a numerical value and then weighted according to the importance of the respective coefficient in the overall decision.

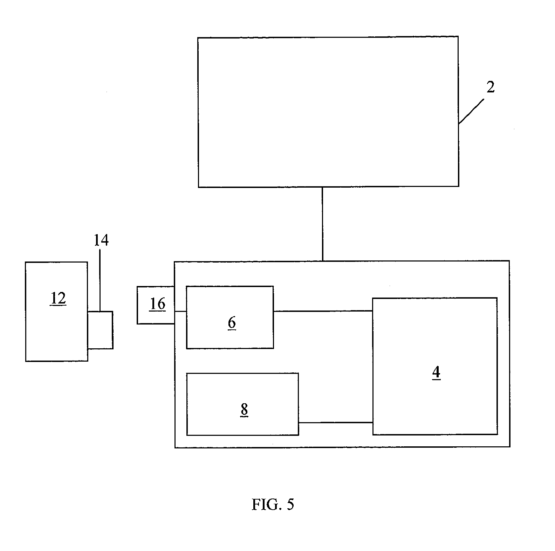

Another embodiment of an apparatus for implementing embodiments of the invention is shown in Fig. 5. This apparatus is similar to the apparatus of Fig. 1, but also includes a camera 12 for capturing images. The camera includes a transmitter 14 for transmitting the captured images to the computer which includes a receiver 16. The receiver transfers the captured images to the image data storage means 6.

In this embodiment, the camera 12 captures images, and encodes them using a technique such as JPEG or MPEG involving the DCT followed by further coding before transmitting the encoded data to the computer. The encoded data is stored in the storage means 6 before being processed by the processor. In this embodiment, the processor operates on the DCT coefficients as produced by the camera, after decoding the transmitted data stream to obtain the DCT coefficients. In other words, the processor is operating on already produced DCT coefficients rather than the image pixel data as in the previous examples. This can make the processing faster. The operations on the DCT coefficients to compare pairs of image regions is as described above.

An example of an application of an apparatus as shown in Fig. 5 is in a video surveillance system.

**Claims**

1. A method of comparing images, the method comprising comparing DCT coefficients for a pair of image regions to determine similarity between the image regions, wherein the comparison involves at least one AC coefficient and wherein the influence of at least one AC coefficient in the determination of similarity is weighted.

2. A method as claimed in claim 1 comprising calculating the difference between at least one pair of corresponding AC coefficients for said pair of image regions and weighting the difference.

3. A method as claimed in claim 2 comprising calculating a weighted difference for a plurality of corresponding pairs of DCT coefficients for said pair of image regions, the method further comprising summing the weighted differences.

4. A method as claimed in claim 2 or claim 3 comprising comparing the weighted difference or sum of weighted differences with a threshold to determine similarity.

5. A method of comparing images, the method comprising comparing DCT coefficients for a pair of image regions to determine similarity between the image regions, wherein a first DCT coefficient for the first image region is compared with the corresponding DCT coefficient for the second image region, and a second DCT coefficient for the first image region is compared with the second DCT coefficient for the second image region, and the result of each comparison is used individually in the determination of similarity.

6. A method as claimed in claim 5 wherein the influence of at least one comparison involving an AC coefficient is weighted in the determination of similarity.

7. A method as claimed in claim 1, claim 5 or claim 6 comprising calculating the difference between at least one pair of corresponding AC coefficients and comparing the difference with a threshold.

8. A method as claimed in claim 7 comprising calculating the difference for a plurality of pairs of corresponding DCT coefficients and comparing each difference with a respective threshold.

9. A method as claimed in claim 7 or claim 8 wherein there are a plurality of thresholds associated with at least one AC coefficient.

10. A method as claimed in claim 9 wherein the selection of a threshold for a DCT coefficient is dependent on the result of the comparison with a threshold for another DCT coefficient.

11. A method as claimed in claim 10 wherein the selection of a threshold for an AC coefficient is dependent on the result of the comparison with a threshold for the DC coefficient.

12. A method as claimed in any one of claims 7 to 11 wherein similarity is determined using a majority decision using the results of the threshold comparisons for one or more DCT coefficients.

13. A method as claimed in any preceding claim involving a plurality of AC coefficients, wherein said plurality of AC coefficients are balanced in the DCT frequency domain by including only coefficients on the diagonal from top left to bottom right of the DCT array, or all coefficients on one or more diagonal lines transverse to said top left to bottom right diagonal in the DCT array.

14. A computer-readable storage medium storing a program for implementing a method as claimed in any preceding claim.

15. An apparatus adapted to implement a method as claimed in any one of claims 1 to 13.

16. An apparatus as claimed in claim 15 comprising a data processor and a storage medium as claimed in claim 14.

17. An apparatus as claimed in claim 15 or claim 16 comprising a source of image data.

18. An apparatus as claimed in any one of claims 15 to 17 which is a video surveillance system.

FIG. 1

FIG. 2

increasing horizontal frequencies

FIG. 3

increasing horizontal frequencies

increasing
vertical
frequencies

FIG. 4

FIG. 5

**European Patent Office**

## EUROPEAN SEARCH REPORT

Application Number

EP 03 25 3131

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/085630 A1 (CABRERA FABRICE ET AL) 4 July 2002 (2002-07-04) * page 1, right-hand column, line 44 - line 58 * * page 2, right-hand column, line 27; figure 4B * ----- | 1-3,5-8, 13-17 | G06T7/20 |

TECHNICAL FIELDS
SEARCHED (Int.Cl.7)

G06T
H04N

The present search report has been drawn up for all claims

| Place of search | Date of completion of the search | Examiner |
|---|---|---|
| THE HAGUE | 19 November 2003 | Chateau, J-P |

**EP 1 480 170 A1**

## ANNEX TO THE EUROPEAN SEARCH REPORT
## ON EUROPEAN PATENT APPLICATION NO.

EP 03 25 3131

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2003

| Patent document cited in search report | Publication date | Patent family member(s) | | Publication date |
|---|---|---|---|---|
| US 2002085630 A1 | 04-07-2002 | CN | 1256049 T | 07-06-2000 |
| | | DE | 69901525 D1 | 27-06-2002 |
| | | DE | 69901525 T2 | 09-01-2003 |
| | | EP | 0976251 A2 | 02-02-2000 |
| | | WO | 9941912 A2 | 19-08-1999 |
| | | JP | 2001520846 T | 30-10-2001 |

EPO FORM P0459

For more details about this annex : see Official Journal of the European Patent Office, No. 12/82

13